# FASCICULE DE BREVET EUROPEEN

(11) **EP 1 047 647 B1**
(45) Date de publication et mention de la délivrance du brevet: **17.03.2004**
(21) Numéro de dépôt: 98947244.4
(22) Date de dépôt: 08.10.1998
(51) Int. Cl.: C04B 16/06

(54) **PRODUITS FACONNES EN FIBRES-CIMENT ET FIBRES DE RENFORCEMENT POUR DE TELS PRODUITS**
PRODUKTE AUS FASERVERSTÄRKTEM ZEMENT UND IN DIESEN PRODUKTEN ENTHALTENE VERSTÄRKUNGSFASERN
SHAPED FIBRE CEMENT PRODUCTS AND REINFORCING FIBRES FOR SAME

(30) Priorité: 15.10.1997 EP 97203209
(43) Date de publication de la demande: 02.11.2000
(73) Titulaire: REDCO S.A., 1880 Kapelle-op-den-Bos. (BE)
(72) Inventeur: VIDTS, Dirk, B-9600 Ronse (BE); de LHONEUX, Benoît, B-1367 Ramillies (BE)
(74) Mandataire: Vandeberg, Marie-Paule L.G.
(86) Numéro de dépôt international: PCT/BE1998/000149
(87) Numéro de publication internationale: WO 1999/019268

(56) Documents cités:
- EP-A- 0 219 579
- EP-A- 0 225 036
- EP-A- 0 535 373
- US-A- 4 952 631

## Description

La présente invention concerne une nouvelle fibre de renforcement pour produits façonnés en fibres-ciment, un procédé de traitement de cette fibre, ainsi que les produits en fibres-ciment renforcés par cette fibre.

On réalise en fibres-ciment des produits solides façonnés les plus divers tels que, entre autres, des éléments de toiture et de façade tels que des ardoises, des plaques planes ou ondulées, des tubes et des réservoirs de stockage.

Ces produits solides façonnés sont fabriqués au départ d'une suspension aqueuse à prise hydraulique comportant des liants hydrauliques, des fibres de renforcement et éventuellement des charges. Cette suspension aqueuse est mélangée afin d'obtenir une distribution en substance uniforme des composants. La suspension est alors égouttée. Le produit frais ainsi obtenu peut ensuite être façonné, par exemple en forme de plaque plane, plaque ondulée ou en forme de tube. Par la suite, on laisse durcir le produit frais façonné dans des conditions atmosphériques ou bien encore dans des conditions de pression, de température et d'humidité spécifiques.

Le procédé de fabrication le plus répandu est le procédé Hatschek, dont la technologie, appliquée à l'origine à l'amiante-ciment, est décrite exhaustivement dans l'ouvrage "Asbestzement" de Harald Klos (Springer Verlag, 1967). D'autres procédés de fabrication sont, par exemple, les procédés Magnani, Mazza, Flow-on, d'extrusion et d'injection.

Le procédé Hatschek est basé sur l'utilisation de machines d'égouttage à tamis cylindrique. Dans ce procédé, un mat provenant d'une suspension diluée d'amiante et de ciment contenue dans un cuvier est transféré à un feutre, par l'intermédiaire d'un égouttoir cylindrique, et est ensuite enroulé jusqu'à l'épaisseur requise à l'aide de cylindres de formage. Pour la fabrication de feuilles ondulées, la feuille d'amiante-ciment formée sur le cylindre de formage est tranchée et détachée de ce cylindre après que l'épaisseur souhaitée a été atteinte. Cette feuille est ensuite façonnée et mise à durcir entre des formes en métal ondulé huilé.

Pour certaines applications il s'avère utile de comprimer le produit frais après sa mise en forme mais avant son durcissement (post-compression). On fait ainsi la distinction entre les produits façonnés en fibres-ciment non comprimés et les produits façonnés en fibres-ciment comprimés. Les produits façonnés en fibres-ciment comprimés ont été comprimés entre leur mise en forme et leur durcissement, sous une pression égale ou supérieure à 4,9 MPa (50 kgf/cm²). Habituellement, ces produits façonnés en fibres-ciment comprimés ont été soumis à l'état frais à des pressions entre 9,8 MPa et 24,5 MPa (entre 100 et 250 kgf/cm²).

L'amiante présente tant des propriétés de renforcement dues à sa résistance à la traction propre que des qualités de mise en oeuvre en relation avec l'excellente aptitude à la dispersion dans une suspension aqueuse de ciment. Pendant le stade d'égouttage, en raison des bonnes propriétés de filtration et de la bonne affinité pour le ciment, les fibres d'amiante peuvent retenir les fines particules en suspension du mélange composite en cours de façonnage. Dans le produit final hydraté, la haute résistance en traction combinée avec le module d'élasticité élevé et le faible allongement à la rupture contribuent à conférer aux produits manufacturés en amiante-ciment leur haute résistance en flexion connue.

Toutefois, l'amiante est devenu un composant indésirable pour des raisons tenant à l'environnement et à la santé et des efforts importants ont été consacrés à des tentatives de le remplacer.

Il est dès lors souhaitable d'utiliser de nouvelles fibres comme agents de renforcement et aussi comme auxiliaires de mise en oeuvre à utiliser avec les liants hydrauliques, par exemple pour le renforcement du ciment.

On n'a découvert aucune fibre naturelle ou synthétique manifestant toutes les propriétés des fibres d'amiante. La résistance aux alcalis dans lés solutions saturées d'hydroxyde de calcium est un critère particulier auquel doivent répondre les fibres de renforcement.

Il est encore important que les fibres puissent être dispersées aisément dans une suspension aqueuse diluée de ciment et restent aussi dispersées uniformément lors de l'apport d'autres additifs lorsque ces fibres doivent être mises en oeuvre par des techniques d'égouttage pour donner des produits en fibres-ciment. La bonne dispersion des fibres est importante à la fois pour qu'elles ne forment pas d'agglomérats et que la densité de fibres soit homogène dans le produit en fibres-ciment fini, mais aussi pour que les fibres ne s'orientent pas dans une direction commune.

En effet, si les fibres adoptaient une direction préférentielle, le produit en fibres-ciment aurait alors une résistance différente selon la direction de la force de rupture.

La littérature contient déjà d'innombrables publications à propos de l'utilisation de diverses fibres organiques et inorganiques naturelles ou synthétiques. Les fibres faites de cellulose, de polyamide, de polyester, de polyacrylonitrile, de polypropylène et de poly(alcool vinylique), entre autres, ont déjà fait l'objet d'investigations pour le renforcement du ciment. De même, on connaît des travaux sur des fibres faites de verre, d'acier, d'aramide et de carbone. Parmi toutes ces fibres, aucune n'a jusqu'à présent toutes les propriétés requises, spécialement pour le ciment.

Par exemple, le verre a une faible stabilité chimique, l'acier manifeste de la corrosion et a une densité trop élevée, le carbone est trop cassant, adhère mal et est de prix élevé, la cellulose a une durabilité insuffisante, et le polyéthylène et le polypropylène ordinaire ont une résistance en traction insuffisante.

Parmi les fibres de renforcement actuellement utilisées, les fibres de polyacrylonitrile (PAN) et d'alcool polyvinylique (PVA) sont généralement préférées. Isolément ou en combinaison, ces fibres permettent de procurer un produit façonné en fibres-ciment ayant une résistance à la traction élevée en combinaison avec une ductilité acceptable. Malheureusement, les fibres de PAN et de PVA sont coûteuses et augmentent considérablement le prix de revient des produits en fibres-ciment les contenant.

Les fibres de polypropylène, ont une excellente résistance aux alcalis, même à des températures pouvant aller jusque 110° C. Ce sont des fibres durables et peu coûteuses. Cependant, il est généralement affirmé que les fibres de polypropylène sont techniquement insuffisantes lorsqu'il s'agit de renforcer des matériaux dont la matrice à base de ciment est relativement cassante.

On a déjà cherché à améliorer les propriétés des fibres de polypropylène notamment par l'incorporation d'additifs dans la masse des fibres. Le document JP 6-219797 de Daïwabo Create décrit des fibres de polypropylène bicomposantes contenant dans leur partie périphérique du carbonate de calcium. Dans GB-2.030.891, des particules dissemblables sont enchâssées par bombardement dans des fibres thermoplastiques.

Les documents GB-2 021 552, WO 94/20654, EP-A-0 240 167, et WO 87/04144 décrivent des produits à prise hydraulique dont les fibres de renforcement sont réalisées au départ de polymère modifié. Les fibres sont donc à chaque fois modifiées dans la masse, ce qui entraîne de nombreux désavantages.

Cette incorporation d'additifs dans la masse même des fibres de polypropylène augmente les coûts de fabrication et entraîne une modification des caractéristiques mécaniques de la fibre de renforcement, notamment en diminuant sa ténacité.

Le document EP 0 310 100 décrit également des fibres de polyoléfine contenant des particules inorganiques enchâssées dans la masse de la fibre, aucune des particules n'étant exposée à la surface de la fibre. Ces fibres sont fabriquées au départ d'un film qui peut avoir subi certain traitements de surface. Les traitements de surface mentionnés consistent en des modifications chimiques, électriques ou mécaniques de la fibre. Ce document mentionne également l'application de surfactants à la surface de la fibre.

On connaît encore des fibres de polypropylène stéréorégulier ayant une résistance à la traction élevée, (EP 0 535 373). Dans le brevet EP 0 537 129 sont décrits des produits manufacturés façonnés solides en ciment renforcés par ce type de fibres de polypropylène.

Un problème encore rencontré dans les produits en fibres-ciment en plaques renforcés par ce type de fibres est l'apparition de fissures dans les bords de la plaque en particulier au cours du vieillissement à long terme de ces produits.

D'autre part, le travail de rupture a une importance considérable pour l'utilisation des produits en fibres-ciment. Une valeur élevée (produit à haute ductilité) est recherchée. Une haute ductilité est, en outre, importante afin de pouvoir, le cas échéant, usiner les pièces en fibres-ciment : forer, clouer, scier, etc. Enfin, la sécurité au cours de l'utilisation des produits, tels que les toitures, s'en trouve également augmentée, car on évite ainsi des ruptures trop rapides ou trop violentes sous charge.

Dans les produits en fibres-ciment non comprimés, renforcés par des fibres de polypropylène, le travail de rupture a généralement une valeur très faible.

Au vu des raisons énumérées ci-dessus, en particulier à cause de leur faible résistance à la fissuration et de leur faible travail de rupture, l'utilisation des produits en fibres-ciment comprimés et non comprimés, dont les fibres de renforcement sont des fibres de polypropylène, est restée jusqu'à présent très limitée.

On peut noter que certaines fibres de polypropylène sont utilisées, en faible quantité, dans des produits en béton, pour réduire la fissuration du béton. On connaît par exemple une fibre commercialisée sous le nom Crackstop®. On connaît également par EP 0 225 036 un procédé de fabrication d'unités de construction en béton comportant des fibres de polyprgpylène traitées pour les rendre anti-statiques. Dans certains modes de réalisation, les fibres comportent un revêtement de surface comportant une émulsion d'un polymère acétate de vinyl-éthylène.

Ce type de fibre a des propriétés mécaniques insuffisantes et est donc totalement inadéquat pour renforcer des produits en fibres-ciment, tels que des éléments de toiture ou de façade. En effet, les produits en fibres-ciment sont caractérisés par un très grand rapport surface/épaisseur. Le problème de fissuration de tels produits est donc complètement différent de celui de produits massifs en béton. Dans les produits en fibres-ciment, les fibres doivent réellement remplir une fonction de renforcement, alors que dans les produits en béton, la quantité de fibres est nettement moins importante et ne remplit pas réellement cette fonction de renforcement. De plus, les proportions des différents constituants, notamment de ciment, sont très différentes dans les produits en fibres-ciment et dans les produits en béton. De même, les conditions de mises en oeuvre et les conditions d'utilisation sont tout à fait différentes.

On a maintenant découvert de façon inattendue et surprenante que des fibres de polypropylène, même ordinaire, mais ayant subi un simple traitement de surface à l'aide d'une dispersion aqueuse de polymères, donnent de bons résultats, c'est-à-dire qu'il est possible de réaliser un produit façonné en fibres-ciment présentant un travail de rupture élevé et une bonne résistance à la fissuration, au moyen de fibres de polypropylène ayant subi ce traitement de surface.

L'invention a pour but de procurer des produits façonnés en fibres-ciment qui évitent les inconvénients propres à l'état de la technique connu.

Un des buts de l'invention est notamment de procurer un produit façonné en fibres-ciment présentant de bonnes propriétés mécaniques, tels qu'un travail de rupture élevé et une bonne résistance à la fissuration, à bas prix de revient.

La présente invention a pour objet une fibre de polypropylène pour le renforcement de produits façonnés en fibres-ciment fabriqués au moyen d'une composition à prise hydraulique comprenant notamment de l'eau, des liants hydrauliques et des fibres de renforcement. Les fibres suivant l'invention comprennent un dépôt de polymère organique comportant des monomères oléfiniques et comportant des groupes polaires, ce dépôt ayant été appliqué par traitement de surface à l'aide d'une dispersion aqueuse de ce polymère.

Ladite dispersion aqueuse comporte, seul ou en mélange, un polymère organique choisi parmi les homopolymères et copolymères de monomères oléfiniques modifiés après synthèse (par exemple par greffage) par des groupes polaires.

Les dits groupes polaires sont choisis parmi l'anhydride maléique, l'acide acrylique, ou l'acide méthacrylique.

D'une manière avantageuse, les fibres de polypropylène ayant subi ledit traitement comprennent de 0.05 à 5% en poids et de préférence de 0.15 à 1.5 % en poids du dit dépôt de polymère organique comportant des groupes polaires, par rapport au poids de fibre.

Les fibres de polypropylène suivant l'invention, ont, de manière préférée, un denier (d) compris entre 0.5 et 10, et de manière encore plus préférée entre 0.5 et 2.

Les fibres peuvent être coupées avantageusement en longueur pouvant aller de 2 à 20 mm; de préférence la longueur des fibres s'échelonne de 5 à 10 mm. La section des fibres peut être circulaire ou de forme irrégulière, par exemple en forme de X ou Y. Les fibres peuvent être crêpées pendant qu'elles sont étirées ou après. La technique de crêpage des fibres peut inclure des opérations telle que la fausse torsion, le traitement d'enchevêtrement par courant d'air (comprenant le traitement TASLAN) ou le traitement par compression (à savoir à la boîte de bourrage). Le fibres suivant l'invention peuvent également être obtenues par fibrillation d'un film de polypropylène extrudé. Les fibres peuvent alors présenter une forme de ruban.

Les fibres de renforcement peuvent être obtenues au départ de résine de tout type de polypropylène couramment utilisé.

Les fibres de polypropylène, ou une partie des fibres de polypropylène, peuvent éventuellement comprendre des charges. Elles peuvent éventuellement comprendre, en outre, un agent d'hydrophilisation tel qu'un sel de métal alcalin d'alcoylphosphate, tel qu'un sel de sodium ou de potassium, comportant avantageusement de 8 à 18 atomes de carbone.

Suivant une variante d'exécution, les fibres suivant l'invention, ou une partie des fibres suivant l'invention, peuvent être constituées de polypropylène hautement cristallin ayant, par exemple, une résistance à la rupture à l'état de fibres supérieure à 490 N/mm², un rapport du poids moléculaire moyen en masse au poids moléculaire moyen en nombre (Q) < à 4,5, une teneur en constituants insolubles (HI) comprise entre 97 et 100 et une fraction de pentades isotactiques en moles (IPF) comprise entre 94 et 100.

Suivant une autre forme d'exécution de l'invention, les fibres de renforcement, ou une partie des fibres de renforcement, peuvent être des fibres de polypropylène bicomposantes, consistant, par exemple, en un noyau et une couche extérieure, dont la couche extérieure contient des particules de carbonate de métaux alcalino-terreux, tels que par exemple, le carbonate de calcium, le carbonate de magnésium ou leurs mélanges.

La présente invention a également pour objet un procédé de traitement de surface de fibres de polypropylène pour le renforcement de produits en fibres-ciment; ce procédé consistant à mettre des fibres de polypropylène en contact avec une dispersion aqueuse de polymères organiques comme définis dans la revendication 5.

D'une manière préférée, la concentration de la dispersion aqueuse est de 0.5 à 40% de polymères organiques.

D'une manière particulièrement avantageuse, ledit traitement de surface est réalisé par mise en contact des fibres avec un rouleau applicateur plongeant dans un bain de traitement comportant ladite dispersion aqueuse. Toutes autres formes de traitement peuvent être envisagées telles que les applications par trempage, par aspersion, ou par rideau.

Suivant la technique utilisé pour le traitement de surface, la concentration de la dispersion doit être ajustée. Pour des traitements par bains, la dispersion aqueuse a de préférence une concentration en polymères organiques comprise entre 0.5 et 10% en matières sèches. Pour des traitements de surface par aspersion, des concentrations préférées de la dispersion sont par exemple comprises entre 10 et 40% en matière sèche.

Ledit traitement de surface est réalisé, au choix, avant, pendant ou après l'étape d'étirage des fibres. Suivant le cas, le traitement est réalisé sur les fibres chaudes ou refroidies.

Plusieurs traitements de surface peuvent éventuellement être prévus lors de la fabrication des fibres de renforcement. Généralement, le bain de traitement peut être réglé entre 20 et 80°C.

La présente invention a aussi pour objet des produits façonnés en fibres-ciment comportant des fibres de renforcement telles que décrites ci-dessus et des fibres de renforcement traitées par le procédé décrit ci-dessus.

De manière préférée, les produits en fibres-ciment comprennent de 0.3 à 4% et de manière encore préférée de 0.5 à 2.5 % en poids par rapport au mélange sec total initial, de fibres de polypropylène suivant l'invention.

Les produits en fibres-ciment conformes à l'invention peuvent comprendre de surcroît des fibres inorganiques ou des fibres organiques autres que les fibres de polypropylène suivant l'invention.

Des exemples de fibres organiques pouvant être utilisées en combinaison avec des fibres de polypropylène traitées sont les fibres de polyacrylonitrile, de poly(alcool vinylique), de polyamide, de polyester, d'aramide, de carbone et de polyoléfines.

Des exemples de fibres inorganiques pouvant être utilisées en combinaison avec des fibres de polypropylène traitées sont les fibres de verre, la laine de roche, la laine de laitier, les fibres de wollastonite, les fibres de céramique et analogues.

Pour des raisons de simplicité, il est fait référence au ciment comme liant préféré dans la présente description. Toutefois, tous les autres liants à prise hydraulique peuvent être utilisés au lieu du ciment. Les liants à prise hydraulique appropriés sont à entendre comme étant des matériaux qui contiennent un ciment inorganique et/ou un liant ou adhésif inorganique qui durcit par hydratation. Des liants particulièrement appropriés qui durcissent par hydratation sont notamment, par exemple, le ciment Portland, le ciment à haute teneur en alumine, le ciment Portland de fer, le ciment de trass, le ciment de laitier, le plâtre, les silicates de calcium formés par traitement à l'autoclave et les combinaisons de liants particuliers.

Des charges et additifs les plus divers qui, par exemple, peuvent améliorer le comportement d'égouttage des suspensions sur les machines d'égouttage, sont fréquemment ajoutés aux liants. Des additifs possibles sont des matériaux tels que les cendres volantes, la silice amorphe, le quartz moulu, la roche moulue, les argiles, les laitiers de haut-fourneau, les carbonates, les pouzzolanes, etc. La quantité totale de charges est, de préférence, inférieure à 50 % en poids par rapport au poids total initial à l'état sec du produit.

Le produit suivant l'invention peut encore comporter, en outre, des fibres de mise en oeuvre de préférence, en une quantité égale ou inférieure à 10 % en poids par rapport au poids total initial à l'état sec du produit.

Le produit suivant l'invention peut, par exemple, être un élément de toiture ou de façade, telle qu'une plaque plane, une plaque ondulée, ou tous autres éléments accessoires de formes diverses.

L'invention est décrite ci-après de façon plus détaillée à l'aide d'exemples particuliers de réalisation.

### EXEMPLES

Dans les exemples suivants, des produits en fibres-ciment renforcés par des fibres de polypropylène traitées suivant l'invention, sont comparés à des produits en fibres-ciment réalisés avec les mêmes fibres de polypropylène non traitées.

### Bains de traitement utilisés

Bain 1) : Composition MICHEM® emulsion 94340-E de Michelman Int'l & Co., diluée avec de l'eau, jusqu'à une concentration de 4% de matières sèches.
   Celle-ci est une dispersion aqueuse comportant du polypropylène greffé à l'anhydride maléique du type Epolene® E-43 de Eastman Chemical. La dispersion a les caractéristiques suivantes :
   - agents émulsifiants : non ioniques
   - taille moyenne des particules : 40 nm
   - pH : 7.5 - 9.0
Bain 2) : même composition que le bain 1), diluée à 4%, à laquelle a été ajouté 0.1 % de surfactant du type Silwet® L-77 de OSI Specialities (alpha-1,1,1,3,5,5,5-Heptaméthyltrisiloxanylpropyl-omega méthoxy-poly(éthylène-oxyde)).
Bain 3) : composition n° M 59840 de Michelman Int'l & Co., diluée avec de l'eau jusqu'à une concentration de 4% de matières sèches, à laquelle à été ajouté 0.1 % de surfactant du type Silwet® L-77 de OSI Specialities.
   La composition n° M 59840 est une dispersion aqueuse comportant un copolymère d'éthylène-propylène greffé à l'anhydride maléique du type A-C® X 597 de Allied Signal.
Bain 5) : Composition Aquacer 524 de Byk-Cera, diluée avec de l'eau jusqu'à une concentration dé 4% de matières sèches.
   Celle-ci est une dispersion aqueuse comportant du polypropylène greffé à l'anhydride maléique du type Epolene® E-43 de Eastman Chemical. La dispersion comporte des agents émulsifiants anioniques.
Bain 6) : composition Aquacer 841 de Byk-Cera, diluée avec de l'eau jusqu'à une concentration de 4% de matières sèches.
   Celle-ci est une dispersion aqueuse comportant du polypropylène greffé à l'anhydride maléique du type Epolene® E-43 de Eastman Chemical. La dispersion comporte des agents émulsifiants cationiques.
Bain 7) : même composition que le bain 1) mais diluée jusqu'à une concentration en matières sèches (polypropylène greffé) de 0.2 %.
Bain 8) : même composition que le bain 1) mais diluée jusqu'à une concentration en matières sèches (polypropylène greffé) de 1.0 %.

Plusieurs essais à blanc sont également réalisés pour démontrer la différence entre les fibres traitées suivant l'invention et des fibres de l'état de la technique traitées avec des agents surfactants connus. Ces agents n'entrent pas dans la définition des polymères comportant des monomères oléfiniques et comportant des groupes polaires :
Blanc A : Composition comprenant 4% d'agent mouillant à base de Siloxane modifié (utilisé pour rendre les fibres de polypropylène hydrophiles) de la société SCHILL UND SEILACHER.
Blanc B : Composition comprenant 4% de Lurol PP-5030-30% (mélange d'émulsifiants, lubrifiants et antistatiques) de la société GOULSTON TECHNOLOGIES
Blanc C : Composition comprenant 4% d'hexanol (couramment utilisé comme agent mouillant).

### Préparation des fibres de polypropylène

Des granulés de résine de polypropylène standard (point de fusion 165°C, indice de fluidité ou "melt flow index" (MFI) de 25) sont chauffés dans une extrudeuse (la température en bout d'extrudeuse variant entre 240°C et 280°C) et filées de manière classique.

Les fibres sont alors étirées avec des équipements classiques.

Suivant un premier procédé de préparation, le filage et l'étirage des fibres sont réalisés de manière discontinue. Suivant un autre procédé de préparation, le filage et l'étirage sont réalisés de manière continue.

Les fibres ont alors les caractéristiques suivantes :
- titre : 1.18 dtex
- ténacité : 730 N/mm²
- module initial : 7460 N/mm²
- élongation à la rupture : 19.0 %

Après étirage, les fibres sont trempées dans un des bains de traitement décrits ci-dessus par contact avec un rouleau applicateur plongeant dans le bain de traitement. La quantité de matière sèche du bain de traitement appliquée sur les fibres par ce traitement est d'environ 0.15% à 1.5% en poids par rapport au poids de fibre.

Cette concentration est mesurée par résonance magnétique nucléaire (RMN) à l'aide d'un appareil commercial OXFORD NMR QP 20+. Cet équipement est utilisé de manière standard pour quantifier les finitions de surfaces appliquées sur les fibres, notamment dans la technologie textile. Cet appareil est conçu pour déterminer la concentration d'un composant déterminé, qui contient des protons dans sa structure moléculaire.

Des essais comparatifs sont également effectué :
1° sans le trempage dans le bain de traitement,
2° avec trempage dans des compositions de surfactants (Blanc A, Blanc B et Blanc C)

Les fibres sont ensuite coupées de manière classique à une longueur de 8 mm avant d'être utilisées dans les mélanges de matériaux de construction.

Dans les exemples 1, 2, 3, 5, 6 ci-après, le trempage dans le bain de traitement est réalisée après l'étirage des fibres, mais il est également possible de réaliser ce traitement pendant l'étape d'étirage ou directement après le filage, avant étirage des fibres. Dans l'exemple 1 bis ci-dessous, le traitement a été effectué entre l'étape de filage et l'étape d'étirage des fibres.

### EXEMPLES 1, 2, 3, 5, 6 et 1bis

### Préparation des mélanges et mise en oeuvre sur machine Hatschek.

Les composés suivants sont mélangés dans de l'eau :
- 77.2 % de ciment,
- 1.8 % de fibres de polypropylène traitées en surface avec l'un des bains décrits ci-dessus,
- 3.0 % de pâte de cellulose Kraft raffinée jusqu'à 65°SR (Schopper-Riegler),
- 3.0 % de silice amorphe, et
- 15% de cendres volantes.

Les concentrations données sont les concentrations en solides par rapport à la matière sèche totale.

On dilue cette suspension avec de l'eau jusqu'à une concentration de 30 g par litre et on la transfère ensuite au cuvier d'une machine Hatschek.

Peu avant l'introduction de la suspension dans le cuvier, on ajoute 200 ppm d'un agent de floculation de type polyacrylamide pour améliorer la rétention du ciment.

On produit des plaques à l'aide de la machine par 22 tours du cylindre de formage.

Les plaques sont ensuite pressées entre des moules en acier huilé dans une presse sous une pression spécifique appliquée de 180 bars (17.7 MPa), jusqu'à une épaisseur moyenne de 5.5 mm.

On fait durcir les feuilles sous couverture de matière plastique pendant 28 jours dans une humidité relative de 100% à 20°C.

### Essais mécaniques de résistance à la flexion et à la fissuration

On exécute les essais mécaniques à l'état sec, à l'air. On détermine tout d'abord la résistance en flexion des échantillons sur une machine d'essai mécanique au cours d'un essai classique de flexion sur trois points.

L'appareil enregistre la courbe contrainte-déformation. Le travail de rupture sous charge maximum (IMOR) exprimé en joules par m² (J/m²) est l'intégrale de la fonction contrainte-déformation jusqu'à la charge de rupture.

On détermine également la résistance à la fissuration par un test sévère conçu pour provoquer des fissures le long des bords des produits fibres-ciment (test de "cracking").

Des fissures sont obtenues en créant artificiellement un gradient d'humidité entre les bords et la partie centrale des plaques par un séchage différentiel entre les zones extérieures et intérieures du produit.

A cet effet, une série de plaques fibres-ciment fabriquée sur une machine Hatschek, comprimées et laissées à durcir sous atmosphère humide pendant 28 jours comme décrit ci-dessus sont découpées en carrés de 30 x 30 cm et empilées les unes sur les autres, un intercalaire étant inséré toutes les 10 pièces.

Le dessus et le dessous de la pile (environ 40 plaques) sont pourvus de deux plaques de recouvrement appropriées non absorbantes en matière telle que l'acier ou le polyester. La pile est placée dans une étuve ventilée à 60°C pendant 24 h.

Des fissures apparaissent alors sur les bords des plaques. Les plaques sont examinées une à une et les longueurs des fissures visibles à l' oeil nu sont mesurées. Les longueurs des fissures de chaque plaque sont additionnées et totalisées par 5 plaques.

Les résultats sont donnés au tableau I ci-après.

**TABLEAU I**

| Traitements | | Propriétés mécaniques des plaques en fibres-ciment comprimées | |
|---|---|---|---|
| | Concentration d'émulsion appliquée (%) | Travail de rupture (IMOR) (J/m²) | Longueur totale des fissures pour 5 plaques (cm) |
| Aucun | | 1174 | 15.9 |
| Bain 1 Après étirage | 0.8 | 1490 (+27%) | 7.0 (-56%) |
| Bain 1 bis Avant étirage | | 1450 (+24%) | 8.1 (-49%) |
| Bain 2 Après étirage | 1.3 | 1564 (+33%) | 2.5 (-84%) |
| Bain 3 Après étirage | 1.3 | 1913 (+63%) | 9.7 (-39%) |
| Bain 5 Après étirage | 1.4 | 2054 (+75%) | 6.8 (-57%) |
| Bain 6 Après étirage | 0.6 | 1511 (+29%) | 7.1 (-55%) |
| Blanc A | | 1050 | 14 |
| Blanc B | | 950 | 16 |
| Blanc C | | 980 | 16 |

On peut déduire du tableau I ci-dessus, que les produits en fibres-ciment comprimés renforcés par des fibres de polypropylène traitées en surface par l'un des bains 1, 1 bis, 2, 3, 5, 6 décrits, présentent un travail de rupture plus important (augmentation de 19 à 75 %) que celui du produit en fibres-ciment utilisant les mêmes fibres de polypropylène mais non traitées.

Cette amélioration du travail de rupture est également marquée par rapport aux produits en fibres-ciment dont les fibres de polypropylène ont été traitées avec un surfactant (Blanc A, B, ou C).

De même, les produits suivant l'invention, présentent lors du test de "cracking" une diminution importante de la longueur totale des fissures mesurée (de 39 à 84 % suivant les cas), que ce soit par rapport au produit comportant des fibres qui n'ont pas subi de traitement ou par rapport aux produits comportant des fibres qui ont subi un traitement à l'aide d'un des blancs A à C.

### EXEMPLES 7 A 8

### Préparation des mélanges et mise en oeuvre sur machine Hatschek.

Le même procédé de préparation que celui décrit pour les exemples 1, 1bis, 2, 3, 5, 6 est utilisé ici, mis à part le fait que les produits ne sont pas comprimés.

Les plaques produites à l'aide de la machine Hatschek sont donc directement mises à durcir sans étape de pressage intermédiaire.

Les résultats sont rassemblés dans le tableau II ci-dessous.

**TABLEAU II**

| Traitements | | Propriétés mécaniques des plaques en fibres-ciment non comprimées | |
|---|---|---|---|
| | Concentration d'émulsion appliquée (%) | Travail de rupture (IMOR) (J/m²) | Longueur totale des fissures mesurée pour 5 plaques (cm) |
| Aucun | | 360 | 52.3 |
| Bain 7 | 0.17 | 1027 (+185%) | 42.5 (-19%) |
| Bain 8 | 0.25 | 1320 (+267%) | 39.9 (-24%) |
| Blanc A | | 370 | 52 |
| Blanc B | | 380 | 49 |
| Blanc C | | 302 | 55 |

De même que pour les produits en fibres-ciment comprimés, pour les produits non comprimés on peut déduire du tableau II ci-dessus, que le traitement de surface des fibres de polypropylène ordinaire par l'un des bains 7 et 8 décrits ci-dessus, procure au produit fini une augmentation importante du travail de rupture (augmentation de 185 à 267 % par rapport au produit dont les fibres n'ont pas subi de traitement). Cette amélioration du travail de rupture est également marquée par rapport aux produits en fibres-ciment dont les fibres de polypropylène ont été traitées avec un surfactant (Blanc A, B, ou C). De même, les valeurs mesurées de longueur totale des fissures pour les produits non comprimés suivant l'invention montrent une diminution de 19 et 24 % par rapport au produit dont les fibres n'ont pas subi de traitement. Cette amélioration de la fissuration s'observe également par rapport aux produits dont les fibres ont été traitées avec l'un des Blancs A à C.

L'invention permet donc avec un traitement de surface, simple et non coûteux, des fibres de polypropylène, d'augmenter le travail de rupture et d'améliorer la résistance à la fissuration des produits en fibres-ciment renforcés par ces fibres. Ce traitement peut être appliqué à tout type de fibre de polypropylène.

Les effets de ce traitement sont particulièrement inattendus. Malgré le très court temps de contact des fibres avec la composition du bain de traitement, l'adhésion des particules sur la fibre semble être importante. Ces effets sont d'autant plus inattendus que, malgré le mélange des fibres et du ciment dans une grande quantité d'eau et sous agitation importante, lors de la fabrication des produits en fibres-ciment, l'effet du traitement des fibres est conservé.

Il est de plus à noter que ces résultats sont obtenus lorsque les produits en fibres-ciment sont soumis à des épreuves dans les conditions les plus défavorables pour la mesure du travail de rupture, c'est-à-dire à l'état sec à l'air.

## Revendications

1. Fibre de polypropylène pour le renforcement de produits en fibres-ciment, **caractérisée en ce qu'**elle comporte en surface, un dépôt de polymère organique choisi parmi les homopolymères et copolymères de monomères oléfiniques modifiés après synthèse par des groupes polaires choisis parmi l'anhydride maléique, l'acide acrylique, ou l'acide méthacrylique, ce dépôt étant appliqué par traitement de surface à l'aide d'une dispersion aqueuse de ce polymère.

2. Fibre suivant l'une quelconque des revendications précédentes, **caractérisée en ce que** le denier (d) des fibres de polypropylène est compris entre 0.5 et 10.

3. Fibre suivant l'une quelconque des revendications précédentes, **caractérisée en ce que** la longueur des fibres de polypropylène est comprise entre 2 et 20 mm.

4. Fibre suivant l'une quelconque des revendications précédentes, **caractérisée en ce que** ledit dépôt représente de 0.05 à 5 % en poids de matière sèche par rapport à la matière sèche de la fibre.

5. Procédé de traitement de surface de fibres de polypropylène pour le renforcement de produits en fibres-ciment, **caractérisé en ce que** les fibres sont mises en contact avec une dispersion aqueuse de polymères organiques choisis parmi les homopolymères et copolymères de monomères oléfiniques modifiés après synthèse par des groupes polaires choisis parmi l'anhydride maléique, l'acide acrylique, ou l'acide méthacrylique.

6. Procédé suivant la revendication précédente, **caractérisé en ce que** ladite dispersion aqueuse comporte de 0.5 à 40 % de polymères organiques comportant des monomères oléfiniques et des groupes polaires.

7. Produit façonné en fibres-ciment fabriqué au moyen d'une composition à prise hydraulique comprenant de l'eau, des liants hydrauliques et des fibres de renforcement suivant l'une quelconque des revendications 1 à 4.

8. Produit façonné en fibres-ciment fabriqué au moyen d'une composition à prise hydraulique comprenant de l'eau, des liants hydrauliques et des fibres de renforcement traitées avec le procédé de traitement suivant l'une quelconque des revendications 5 et 6.

9. Produit suivant l'une quelconque des revendications 7 et 8, **caractérisé en ce qu'**il comprend de 1 à 5% en poids par rapport au mélange sec total initial, de fibres de renforcement.

10. Produit suivant l'une quelconque des revendications 7 à 9, **caractérisé en ce qu'**il consiste en une plaque ondulée ou plane.

## Patentansprüche

1. Polypropylenfaser zur Verstärkung von Produkten aus Faserzement, **dadurch gekennzeichnet, dass** sie an der Oberfläche einen organischen Polymerüberzug umfasst, der unter den Homopolymeren und Copolymeren von Olefinmonomeren ausgewählt wird, die nach Synthese durch Polargruppen, die unter dem Maleinanhydrid, der Acrylsäure oder Methacrylsäure ausgewählt werden, modifiziert wurden, wobei dieser Überzug durch Oberflächenbehandlung mit Hilfe einer wäßerigen Dispersion dieses Polymers aufgebracht wird.

2. Faser nach dem vorhergehenden Anspruch, **dadurch gekennzeichnet, dass** das Denier (d) der Polypropylenfasern zwischen 0,5 und 10 beträgt.

3. Faser nach einem der vorhergehenden Ansprüche, **dadurch gekennzeichnet, dass** die Länge der Polypropylenfasern zwischen 2 und 20 mm beträgt.

4. Faser nach einem der vorhergehenden Ansprüche, **dadurch gekennzeichnet, dass** der Überzug 0,05 bis 5 Gew.-% Trockenmasse bezogen auf die Trockenmasse der Faser darstellt.

5. Verfahren zur Oberflächenbehandlung von Polypropylenfasern zur Verstärkung von Produkten aus Faserzement, **dadurch gekennzeichnet, dass** die Fasern mit einer wäßerigen Dispersion organischer Polymere in Kontakt gebracht werden, die unter den Homopolymeren und Copolymeren von Olefinmonomeren ausgewählt werden, die nach Synthese durch Polargruppen, die unter dem Maleinanhydrid, der Acrylsäure oder der Methacrylsäure ausgewählt werden, modifiziert wurden.

6. Verfahren nach dem vorhergehenden Anspruch, **dadurch gekennzeichnet, dass** die wäßerige Dispersion 0,5 bis 40% organische Polymere umfasst, die Olefinmonomere und Polargruppen umfassen.

7. Formprodukt aus Faserzement, das mit Hilfe einer hydraulisch fest werdenden Zusammensetzung, die Wasser, hydraulische Bindemittel und Verstärkungsfasern nach einem der Ansprüche 1 bis 4 enthält, hergestellt wird.

8. Formprodukt aus Faserzement, das mit Hilfe einer hydraulisch fest werdenden Zusammensetzung hergestellt wird, die Wasser, hydraulische Bindemittel und Verstärkungsfasern, die mit dem Behandlungsverfahren nach einem der Ansprüche 5 und 6 behandelt wurden, enthält.

9. Produkt nach einem der Ansprüche 7 und 8, **dadurch gekennzeichnet, dass** es 1 bis 5 Gew.-% Verstärkungsfasern bezogen auf die ursprüngliche Gesamttrockenmischung umfasst.

10. Produkt nach einem der Ansprüche 7 bis 9, **dadurch gekennzeichnet, dass** es in einer welligen oder flachen Platte besteht.

## Claims

1. Polypropylene fibre for the reinforcement of fibre-cement products, **characterized in that** it comprises, on the surface, a coating of organic polymer chosen from homopolymers and copolymers of olefin monomers modified after synthesis by polar groups chosen from maleic anhydride, acrylic acid or methacrylic acid, this coating being applied by surface treatment with the aid of an aqueous dispersion of this polymer.

2. Fibre according to the preceding claim, **characterized in that** the denier (d) of the polypropylene fibres is between 0.5 and 10.

3. Fibre according to either of the preceding claims, **characterized in that** the length of the polypropylene fibres is between 2 and 20 mm.

4. Fibre according to any one of the preceding claims, **characterized in that** the said coating represents from 0.05 to 5% by weight of dry matter with respect to the dry matter of the fibre.

5. Process for the surface treatment of polypropylene fibres for the reinforcement of fibre-cement products, **characterized in that** the fibres are brought into contact with an aqueous dispersion of organic polymers chosen from homopolymers and copolymers of olefin monomers modified after synthesis by polar groups chosen from maleic anhydride, acrylic acid or methacrylic acid.

6. Process according to the preceding claim, **characterized in that** the said aqueous dispersion comprises from 0.5 to 40% of organic polymers comprising olefin monomers and polar groups.

7. Shaped fibre-cement product manufactured by means of a hydraulic-setting composition comprising water, hydraulic binders and reinforcing fibres according to any one of Claims 1 to 4.

8. Shaped fibre-cement product manufactured by means of a hydraulic-setting composition comprising water, hydraulic binders and reinforcing fibres treated using the treatment process according to either of Claims 5 and 6.

9. Product according to either of Claims 7 and 8, **characterized in that** it comprises from 1 to 5% by weight, with respect to the initial total dry mixture, of reinforcing fibres.

10. Product according to any one of Claims 7 to 9, **characterized in that** it consists of a corrugated or plane sheet.
